## Europäisches Patentamt
## European Patent Office
## Office européen des brevets

(11) Publication number: **0 008 907**
A1

# EUROPEAN PATENT APPLICATION

(21) Application number: **79301710.4**

(51) Int. Cl.³: **B 62 D 55/30**

(22) Date of filing: **21.08.79**

(30) Priority: **07.09.78 GB 3590978**

(43) Date of publication of application:
**19.03.80 Bulletin 80/6**

(84) Designated Contracting States:
**AT BE CH DE FR GB IT LU NL SE**

(71) Applicant: **PRIESTMAN BROTHERS LIMITED**
**Hedon Road**
**Hull, HU9 5PA(GB)**

(72) Inventor: **Robinson, Frank Melville**
**42, Thorn Road Hedon**
**Nr. Hull,Humberside(GB)**

(72) Inventor: **Townsend, Peter Roland**
**27, Willow Road Burstwick**
**Nr. Hull, Humberside(GB)**

(74) Representative: **Brunner, Michael John et al,**
**Gill Jennings & Every 53 to 64, Chancery Lane**
**London WC2A 1HN(GB)**

(54) Vehicle with track tensioning system.

(57) System for automatically tensioning an endless track (4) of a tracklaying vehicle driven by a fluid motor (9). The system (8) comprises means (12, 13, 14, 15 and 17) for supplying operating fluid to an adjusting cylinder (18) operatively coupled to a wheel (6) which supports the track (4) to cause the wheel (6) to be biased in a direction to tension the track (4). A pressure accumulator (16) may be provided for absorbing shock loads imposed from the track (4) on the adjusting cylinder (18).

./...

EP 0 008 907 A1

*Fig.2.*

PRIESTMAN BROTHERS LIMITED ·        GJE 5179/217

## VEHICLE WITH TRACK TENSIONING SYSTEM

The present invention relates to track-laying vehicles and in particular to means for tensioning the tracks of such vehicles.

It is required to maintain, as far as possible, a predetermined tension in the tracks of track-laying vehicles in order to ensure that the tracks remain correctly positioned and also in order to reduce the amount of wear on the various component parts of the tracks. In the past this has been done by adjusting one or more of the wheels supporting each track by means of screw jacks or by fluid pressure applied manually to an adjusting cylinder by a grease/oil-type gun. If the adjustable supporting wheel is positioned between the ends of the track assembly then it may be moved generally perpendicularly to the longitudinal direction of the track, and if the adjustable supporting wheel is an end sprocket wheel then it may be moved parallel to the longitudinal direction.

With the means of adjustment described above it is necessary to check the tension in the track at regular intervals and, if necessary, readjust it. This is obviously time-consuming and therefore an automatic method of tensioning a track would be preferable.

According to the present invention a track-laying vehicle having an endless track driven by a fluid motor includes a system for automatically tensioning the track, the system comprising means for supplying operating fluid supplied to the fluid motor additionally to an adjusting cylinder operatively coupled to a wheel supporting the track to cause the wheel to be biased in a direction to tension the track.

Such a system can obviously reduce the time spent by a mechanic in checking that the correct tension is being maintained on the track and of course, it is relatively simple to extend the fluid supply line from the motor to the adjusting cylinder.

Generally, the pressure supplied by a pump to the track motor will be very high and it is therefore preferable if a pressure reducing valve is incorporated between the motor and the adjusting cylinder. Also a check-valve can be incorporated to prevent reverse flow of fluid from the adjusting cylinder to the motor thereby preventing extraneous pressure affecting the operation of the motor. A shut-off valve is included to stop the flow supplied to the adjusting cylinder so that the pressure in the cylinder may then be reduced by means of a bleed screw for example when dismantling the track.

In the prior art adjusting devices shock loads exerted on the track and passed to the adjusting cylinder have been taken up by the use of springs. In a vehicle according to the present invention a pressure accumulator may be provided between the motor and the adjusting cylinder to form a fluid spring in order to take-up normal shock loads. Preferably, such an accumulator will be filled not with the hydraulic fluid used to operate the motor and the adjusting cylinder, but with a more compressible fluid such as nitrogen. The fluid used for maintaining the tension in the track can then be arranged to act on the fluid in the accumulator across a diaphragm or other equivalent device.

- 3 -

One example of a vehicle track tensioning system according to the present invention will now be described with reference to the accompanying drawings in which:-

Figure 1 is a diagrammatic representation of a vehicle having a tracked drive; and,

Figure 2 is a diagrammatic representation of the tensioning system.

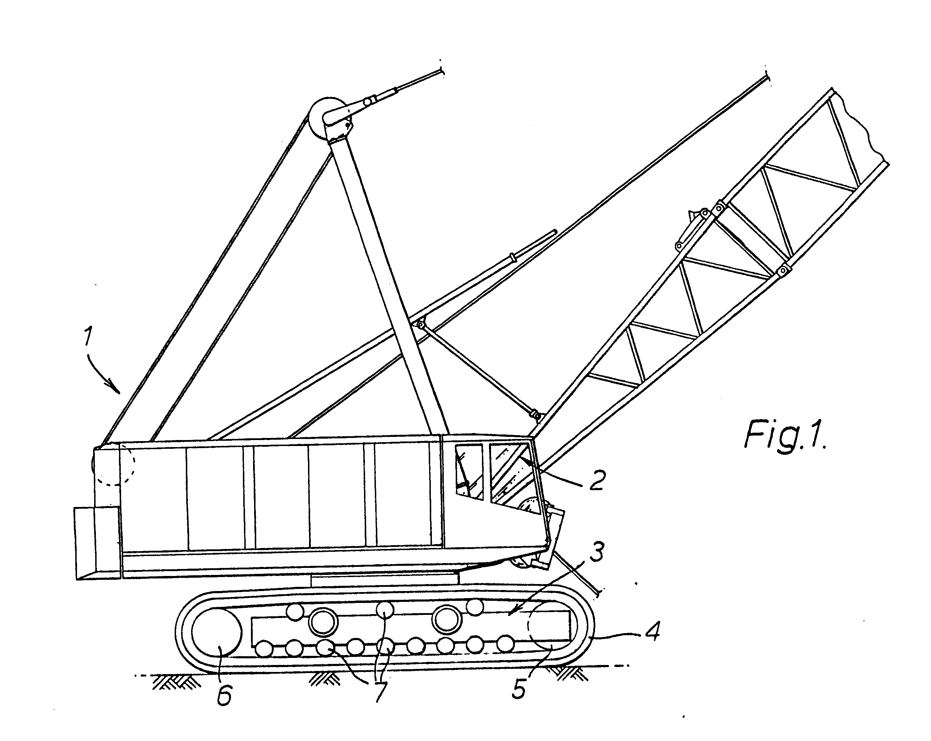

In Figure 1 there is shown a crane 1 which has a superstructure 2 mounted on a chassis 3 having a pair of endless tracks 4 (only one of which can be seen in the figure). Each of the tracks 4 is driven by a sprocket wheel 5 at one end and passes round an idler wheel 6 at its opposite end. A plurality of intermediate idler wheels 7 support the track 4 between its ends.

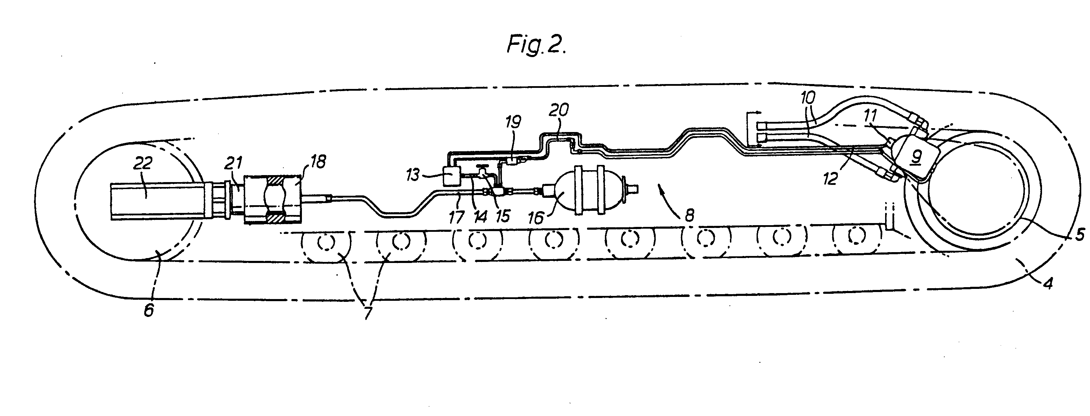

Referring now to Figure 2, the track 4 and wheels 5,6,and 7 are indicated in broken line, only the track tensioning system 8 being shown in solid line.

In order to drive the sprocket wheel 5 a fluid motor 9 is provided mounted closely adjacent the sprocket wheel 5 and driving the wheel 5 through a transmission (not shown). In order to power the motor 9 hydraulic fluid under pressure from a pump (not shown) is supplied through feed lines 10. Depending on the direction of flow through the feed lines so the motor will be driven in one direction or the other to cause corresponding directional movement of the track 4. It will be appreciated that each track assembly has its own motor and track-tensioning system 8, but only one is shown in Figure 2. The supply lines 10 are connected externally of the motor 9 to a shuttle valve 11 which is arranged to pass fluid pressure to a supply line 12. The shuttle valve 11 serves to allow fluid from whichever supply line 10 is under the higher pressure to be passed to the supply line 12 whilst at the same time preventing the supply of fluid to the other supply line 10.

- 4 -

Fluid pressure is communicated by way of the supply line 12 to a pressure reducing valve 13. The pressure reducing valve 13 is used because the fluid pressure supplied to the motor from the pump is extremely high and such high pressure is not needed to cause tensioning of the track. From the pressure reducing valve 13 the hydraulic pressure is supplied through check valve 14 and through a shut-off valve 15 to a pressure accumulator 16 and, via line 17 to an actuating cylinder 18. The one-way check valve 14 prevents fluid pressure loads exerted on the cylinder by the track from being transmitted back to the motor. A relief valve 19 is connected from the line 17 back to a line 20 as a safety measure in case excessive pressure should build up in the line 17, in the line 20 leading back to the motor 9.

The accumulator has, internally, a diaphragm and on the side of the diaphragm remote from the line 17, is filled with nitrogen or other suitable gas in order to receive shock loads communicated by way of line 17 from the track. The accumulator thus acts to take up the shock loads by compression of the gas therein. The cylinder 18 has a piston 21 which bears against a yoke 22 which is slidably supported and which carries the idler wheel 6. The cylinder also includes a bleed screw (not shown) to bleed out air on initial assembly or to bleed hydraulic fluid necessary during regular maintenance and also to enable the track to be slacked off as is sometimes required with certain ground conditions.

In use, fluid pressure resulting from pressurization of the fluid lines 10 causes the piston 21 to be moved outwardly of the cylinder 18 to tension the track, the degree of tensioning being controlled by the pressure reducing valve 13 to a required level in order to prevent

- 5 -

over-tensioning of the track and thus undue wear on the component parts of the track.

0008907

- 6 -

CLAIMS

1. A track-laying vehicle (1) having an endless track (4) driven by a fluid motor (9), and a system (8) for automatically tensioning the track (4), characterized in that the system (8) comprises means (12, 13, 14, 15 and 17) for supplying operating fluid supplied to the fluid motor additionally to an adjusting cylinder (18) operatively coupled to a wheel (6) supporting the track (4) to cause the wheel (6) to be biased in a direction to tension the track (4).

2. A vehicle according to claim 1, characterized in that the system (8) includes a pressure accumulator (16) for absorbing shock loads imposed from the track (4) on the adjusting cylinder (18).

3. A vehicle according to claim 1 or claim 2, characterized in that the adjusting cylinder (18) has a piston (21) operatively connected to a yoke (22) which supports the wheel (6).

4. A vehicle according to any of claims 1 to 3, characterized in that a pressure reducing valve (13) is disposed between the motor (9) and the adjusting cylinder (18).

5. A vehicle according to any of claims 1 to 4, characterized in that a shut-off valve (15) is disposed between the motor (9) and the adjusting cylinder (18).

6. A vehicle according to any of claims 1 to 5, characterized in that a pressure relief valve (19) is

0008907

connected to the means for supplying pressure to the
adjusting cylinder (18) to prevent over-tensioning of
the track (4).

Fig.1.

0008907

Fig.2.

European Patent
Office

**EUROPEAN SEARCH REPORT**

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages | Relevant to claim | |
| X | US – A- 3 910 649 (RÖSKAFT)<br>* from column 4, line 7 to column 5, line 53; fig. *<br>-- | 1-5 | B 62 D 55/30 |
| | DE – A – 1 810 354 (DEMAG)<br>* pages 4, 5; fig. 3 *<br>-- | 1,3,6 | |
| | US – A – 3 972 569 (BRICKNELL)<br>* column 2, lines 17 to 31; fig. *<br>---- | 1-3 | **TECHNICAL FIELDS SEARCHED (Int.Cl.)**<br><br>B 62 D 55/00 |
| | | | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| X | The present search report has been drawn up for all claims | | |
|---|---|---|---|
| Place of search<br>Berlin | Date of completion of the search<br>12-11-1979 | Examiner<br>LEITZ | |

EPO Form 1503.1   06.78